# NEUE EUROPÄISCHE PATENTSCHRIFT

(11) **EP 1 361 966 B2**
(45) Veröffentlichungstag und Bekanntmachung des Hinweises auf die Entscheidung über den Einspruch: **13.06.2007**
(45) Hinweis auf die Patenterteilung: 22.09.2004
(21) Anmeldenummer: 02804173.9
(22) Anmeldetag: 06.11.2002
(51) Int. Cl.: B60J 7/14, B60J 7/12

(54) **VERSTELLBARES FAHRZEUGDACH**
MOVABLE VEHICLE ROOF
TOIT DE VEHICULE MOBILE

(30) Priorität: 03.12.2001 DE 10158938; 15.02.2002 DE 10206650
(43) Veröffentlichungstag der Anmeldung: 19.11.2003
(73) Patentinhaber: CTS Fahrzeug-Dachsysteme GmbH, 74321 Bietigheim-Bissingen (DE)
(72) Erfinder: SALZ, Wolfram, 71665 Vaihingen/Enz (DE); BRUDER, Gernot, 76131 Karlsruhe (DE); PAPENDORF, Marcus, 74354 Besigheim (DE); HASSELGRUBER, Andreas, 71735 Eberdingen-Nussdorf (DE); RÖSLER, Matthias, 70190 Stuttgart (DE); BERTZ, Frank, 71277 Rutesheim (DE)
(74) Vertreter: Müller, Gottfried
(86) Internationale Anmeldenummer: PCT/EP2002/012370
(87) Internationale Veröffentlichungsnummer: WO 2003/047896

(56) Entgegenhaltungen:
- BE-A- 493 260
- DE-A- 3 236 034
- DE-C- 869 159
- DE-C- 4 311 260
- DE-C- 4 445 580
- DE-C- 10 021 333
- DE-C- 19 805 477

## Beschreibung

Die Erfindung bezieht sich auf ein verstellbares Fahrzeugdach nach dem in DE 869159 A offenbarten Oberbegriff des Anspruches 1.

Aus der Druckschrift DE 199 60 010 C1 ist ein Klappverdeck für Fahrzeuge bekannt, welches zwischen einer den Fahrzeuginnenraum überdeckenden Schließstellung und einer Ablagestellung zu verstellen ist, in der das Verdeck in einem heckseitigen Stauraum abgelegt ist. Das Verdeck ist über eine Dachkinematik, welche an einer karosserieseitigen Konsole gehalten ist, über ein erstes hydraulisches Stellelement zu verstellen. Die Konsole ist schwenkbar an der Fahrzeugkarosserie gelagert und kann über ein zweites hydraulisches Stellelement verschwenkt werden. Diese kombinierte Bewegung über die Dachkinematik einerseits und die die Dachkinematik tragende Konsole andererseits ermöglicht ein kompaktes Ablagemaß, setzt jedoch die Betätigung über zwei separate und energieverbrauchende Stellelemente voraus.

Aus der Druckschrift DE 198 05 477 C1 ist ein Cabriolet-Fahrzeug mit einem Hardtop-Fahrzeugdach bekannt, das aus zwei in sich starren Dachteilen besteht, die über eine Dachkinematik an die Fahrzeugkarosserie gekoppelt sind und mittels eines an einem Lenker der Dachkinematik angreifenden Steuerelementes zwischen Schließ- und Ablageposition zu verstellen sind. Die Dachkinematik ist als Viergelenkkinematik ausgeführt, über die das hintere Dachteil mit der Fahrzeugkarosserie gekoppelt ist.

Bei derartigen Kinematiken besteht das Problem, dass auf Grund der vergleichsweise kurzen Hebellängen zwischen karosseriefestem Drehpunkt der Dachkinematik und Angriffspunkt des Steuerelementes verhältnismäßig hohe Stellkräfte für die Überführung des Fahrzeugdaches zwischen den Endpositionen erforderlich sind. Diese hohen Stellkräfte können zwar mit Hilfe hydraulischer Stellelemente erzeugt werden, es besteht jedoch die Gefahr von Bauteilverformungen im Bereich der Kraftangriffspunkte des Stellelementes an der Dachkinematik bzw. an den Abstützpunkten zur Fahrzeugkarosserie.

Nachteilig ist auch, dass üblicherweise nur in einer der beiden Endlagen des Fahrzeugdaches ein günstiges Hebelverhältnis des Steuerelementes an der Dachkinematik gegeben ist, wohingegen in der jeweils anderen Endlage das Fahrzeugdach aus einer ungünstigen Hebelsituation heraus mit entsprechend hohen Stellkräften angehoben werden muss, wodurch die Gefahr von bauteilschädigenden Stellkräften noch erhöht wird.

In der Druckschrift DE 100 21 333 C1 wird ein Cabriolet-Fahrzeug mit einem mehrteiligen Hardtop-Fahrzeugdach beschrieben, das mit Hilfe einer Mehrgelenkkinematik zwischen Schließund Ablageposition zu verstellen ist. An der Mehrgelenkkinematik greift eine Spannfeder an, die die Kinematik bei Betätigung eines Bowdenzuges aus einer Totpunktlage löst, um eine Überführung des Daches in die Schließposition zu ermöglichen. Die Spannfeder unterstützt aber nicht den Schließvorgang oder den Ablagevorgang des Daches.

In der Druckschrift DE 40 26 392 A1 wird ein Aufstelldach für ein Wohnmobil beschrieben, welches gegenüber dem karosseriefesten Dachaufbau des Fahrzeuges bei Bedarf winklig angehoben werden kann. Die Anhebung erfolgt mithilfe einer Aufbaudachkinematik, welche zwei gelenkig gekoppelte Arme umfasst, die zwischen einer zusammengeklappten Position und einer aufgestellten Position zu verstellen sind. Um in etwa das Gewicht des Aufbaudaches in der Aufbaudachkinematik kompensieren zu können, ist an einem Arm der Aufbaudachkinematik eine Zugfeder gehalten, die mit einem um das Gelenk zwischen den Armen gelegten Zugseil verbunden ist, das mit seiner der Zugfeder abgewandten Seite mit dem anderen Arm gekoppelt ist. Die Zugfeder übt permanent eine Öffnungskraft auf die Aufbaudachkinematik aus, welche bestrebt ist, die beiden Lenker aus ihrer zusammengeklappten Schließposition in die Öffnungsposition zu verstellen, in welcher das Aufbaudach aufgestellt ist. Die Federkraft ist in jeder Lage der Aufbaudachkinematik der Gewichtskraft entgegengerichtet, so dass prinzipiell nur dynamische Stellkräfte sowie Reibungskräfte in den Lagern für das Öffnen und Schließen des Aufbaudaches zu überwinden sind. Das Aufbaudach wird somit immer in Richtung seiner geöffneten Position kraftbeaufschlagt.

Die BE 493 260 A beschreibt ein einteiliges Fahrzeugdach, das mittels eines einzigen Lenkers von einer Öffnungsstellung in eine Schließstellung verschwenkbar ist. Der Lenker ist karosserieseitig mit dem Gelenk angelenkt. Heckseitig ist das Fahrzeugdach mit einer Rolle versehen, über die es entlang einer Führungsbahn verschiebbar geführt ist. Weiterhin ist eine Zugfeder vorgesehen, die sich zwischen einem karosserieseitigen Anlenkpunkt und einem Ende des Lenkers erstreckt. Die Zugfeder unterstützt sowohl die Öffnungs- als auch die Schließbewegung der Dachkinematik. Die Lagerung des Fahrzeugdaches ist aufgrund der Führungsbahn äußerst aufwändig. Weiterhin sind die bei dem Verschiebevorgang des Daches auftretenden Reibungskräfte nicht unerheblich, was einerseits einen erhöhten Kraftaufwand für die Verstellbewegung und andererseits einen erhöhten Verschleiß, insbesondere der Rolle und der Führungsbahn, zur Folge hat.

Die DE 32 36 034 A1 offenbart ein Fahrzeugdach mit einer Viergelenk-Dachkinematik. Bei der bekannten Dachkinematik ist der hintere Lenker Bestandteil des hinteren Dachteils und ist einerseits karosserieseitig und andererseits an dem vorderen Dachteil angelenkt. Der Zwischenlenker der bekannten Viergelenk-Dachkinematik wird von dem vorderen Dachteil gebildet, welches zusätzlich an dem vorderen Lenker der Viergelenk-Dachkinematik angelenkt ist.

Die DE-PS 869 159 offenbart ein verstellbares Klappverdeck mit einem kinematischen Verstellmechanismus, der von einem fahrzeugfesten Motor angetrieben wird. Der Verstellmechanismus des Klappverdecks umfasst einen gelenkig an der Fahrzeugkarosserie gelagerten Hauptspriegel, der mit Hilfe eines mehrteiligen Antriebsgelenkmechanismus von dem Antriebsmotor zur Verstellung des Verdeckes zwischen dessen Öffnungs- und Schließposition beaufschlagt wird.

Des Weiteren ist zwischen dem Hauptspriegel des Verstellmechanismus und der Fahrzeugkarosserie ein Federelement angeordnet, das als Zugfeder ausgebildet ist und sowohl die Schließbewegung als auch die Öffnungsbewegung des Verdeckes jeweils zu Beginn jeder Bewegung unterstützt.

Der Erfindung liegt das Problem zugrunde, ein verstellbares Fahrzeugdach zu schaffen, welches mit einfachen Mitteln mit verhältnismäßig geringen Stellkräften aus beiden Endlagen anzuheben ist.

Dieses Problem wird erfindungsgemäß mit den Merkmalen des Anspruches 1 gelöst. Die Unteransprüche enthalten zweckmäßige Weiterbildungen.

Dem erfindungsgemäßen Fahrzeugdach ist zusätzlich zum Stellelement ein Federelement zugeordnet, welches gegenüber der Fahrzeugkarosserie abgestützt ist und die Dachkinematik in beiden Endpositionen des Fahrzeugdaches - in der Schließposition und der Ablageposition - in Richtung der gegenüberliegenden Endposition kraftbeaufschlagt. Hierdurch wird die Anfangsbewegung des Fahrzeugdaches beim Anheben aus der betreffenden Endposition unterstützt, so dass die von dem Stellelement, welches an der Dachkinematik angreift, aufzubringenden Stellkräfte geringer sein können als im Stand der Technik und die Gefahr von Bauteilverformungen reduziert ist.

Ein weiterer Vorteil ist darin zu sehen, dass das Federelement auch beim Überführen in die betreffende Endlage wirkt und der Überführungsbewegung zumindest im letzten Bewegungsabschnitt kurz vor Erreichen der Endlage entgegenwirkt, so dass diese Endlage mit einer reduzierten Geschwindigkeitskomponente erreicht wird, die im Idealfall Null ist. Die Endlage wird im Wesentlichen stoß- und impulsfrei erreicht.

Die Reduzierung der von dem Stellelement aufzubringenden Stellkräfte führt auch zu einer Verkleinerung der Dimensionierung des Stellelementes. Ein weiterer Vorteil besteht darin, dass bei einem Ausfall des Stellelementes das Fahrzeugdach mit geringeren manuellen Kräften zwischen seinen Endpositionen verstellt werden kann.

Zweckmäßig ist die Dachkinematik in jeder Endposition, also sowohl in der Schließposition als auch in der Ablageposition des Fahrzeugdaches, in die jeweils gegenüberliegende Endposition kraftbeaufschlagt. Es genügt ein einziges Federelement, bei dem es sich beispielsweise um eine Zug-Druck-Feder handeln kann, die in einer Endposition auf Zug und in der gegenüberliegenden Endposition auf Druck beansprucht wird. In einer alternativen Ausführung wird das Federelement in jeder Endposition in der gleichen Wirkrichtung beaufschlagt, was insbesondere dadurch erreicht werden kann, dass das Federelement an einem Bauteil der Dachkinematik angreift, welches zum Anheben des Daches aus jeder der beiden Endpositionen in die gleiche Richtung verstellt wird. Vorteilhaft handelt es sich bei einem derartigen Federelement um eine Gasdruckfeder.

Die Dachkinematik umfaßt ein Viergelenk mit zwei karosserieseitig abgestützten Lenkern und einem zwischenliegenden Koppellenker oder C-Säulenlenker, wobei ein erster der karosserieseitigen Lenker als Antriebslenker von dem Stellelement beaufschlagt wird und zweckmäßig der zweite karosserieseitige Lenker als Stützlenker von dem Federelement beaufschlagt wird. Der Stützlenker ist insbesondere als Dreieckslenker ausgebildet, der über ein mittleres Gelenk karosseriefest gehalten ist und über zwei außen liegende Gelenke mit dem verbindenden Koppellenker sowie mit dem Federelement verbunden ist. Der Stützlenker führt bevorzugt sowohl bei der Überführung des Daches von Schließ- in Ablageposition als auch in Gegenrichtung jeweils eine ähnliche, gleichsinnige Bewegung aus, nämlich eine Schwenkbewegung zunächst in einer Richtung, die sich bei Erreichen einer Zwischenposition des Fahrzeugdaches in eine Schwenkbewegung in Gegenrichtung umkehrt. Diese Ausführung eignet sich in besonders vorteilhafter Weise für den Einsatz eines lediglich in einer Kraftrichtung wirkenden Federelementes wie zum Beispiel die Gasdruckfeder.

Das Federelement bzw. die Federelemente sind vorzugsweise in der Weise angeordnet bzw. aufeinander abgestimmt, dass die resultierende Federkraft des Federelementes bzw. der Federelemente auf die Dachkinematik in einer Zwischenposition des Fahrzeugdaches zwischen Schließ- und Ablagestellung näherungsweise zu Null wird. Die für die Verstellung des Fahrzeugdaches erforderlichen Stellkräfte, die über das Stellelement aufzubringen sind, werden hierdurch reduziert.

Eine weitere Verbesserung eines verstellbaren Fahrzeugdaches in der Weise, dass das Dach mit einfachen Mitteln mit verhältnismäßig geringen Stellkräften aus beiden Endlagen anzuheben ist, wobei sich die Verbesserung insbesondere auch durch eine einfache Konstruktion auszeichnen soll, kann dadurch erreicht werden, dass die Dachkinematik einen ein Dachteil abstützenden Hauptlenker umfasst, der karosserieseitig drehbar gelagert ist, und dass das Federelement den Hauptlenker mit Abstand zu dessen karosserieseitiger Drehachse kraftbeaufschlagt. Der Hauptlenker als ein tragendes Bauteil der Dachkinematik wird in dieser Ausführung direkt und unmittelbar von dem Federelement beaufschlagt; weitere, zwischenliegende Bauteile zwischen Fahrzeugkarosserie und Hauptlenker werden für die Anlenkung durch das Federelement nicht benötigt. Hierdurch kann eine einfache und zugleich wirkungsvolle Unterstützung beim Anheben aus der Fahrzeugdach-Endposition realisiert werden.

Weitere Vorteile und zweckmäßige Ausführungen sind den weiteren Ansprüchen, der beispielhaften Figurenbeschreibung und den Zeichnungen zu entnehmen. Es zeigen:
- Fig. 1: ein verstellbares Fahrzeugdach mit einer karosserieseitig angelenkten Dachkinematik, die von einem hydraulischen Stellelement sowie von einem als Gasdruckfeder ausgeführten Federelement beaufschlagt wird, in Schließposition des Daches,
- Fig. 2: das Fahrzeugdach aus Fig. 1 in einer Zwischenposition zwischen Schließ- und Ablagestellung,
- Fig. 3: das Fahrzeugdach in Ablagestellung in einem heckseitigen Ablageraum,
- Fig. 4a bis Fig. 4c: ein verstellbares Fahrzeugdach mit einem karosserieseitig schwenkbar gelagerten Hauptlenker, der in jeder Endposition von einem als Zugfeder ausgebildeten Federelement in die jeweils gegenüberliegende Endposition kraftbeaufschlagt ist, dargestellt in Schließposition, in einer Übergangsposition und in Ablageposition,
- Fig. 5a bis Fig. 5c: den vorhergehenden Figuren entsprechende Darstellungen, jedoch mit einem als Druckfeder ausgeführten Federelement.

In den Figuren sind gleiche Bauteile mit gleichen Bezugszeichen versehen.

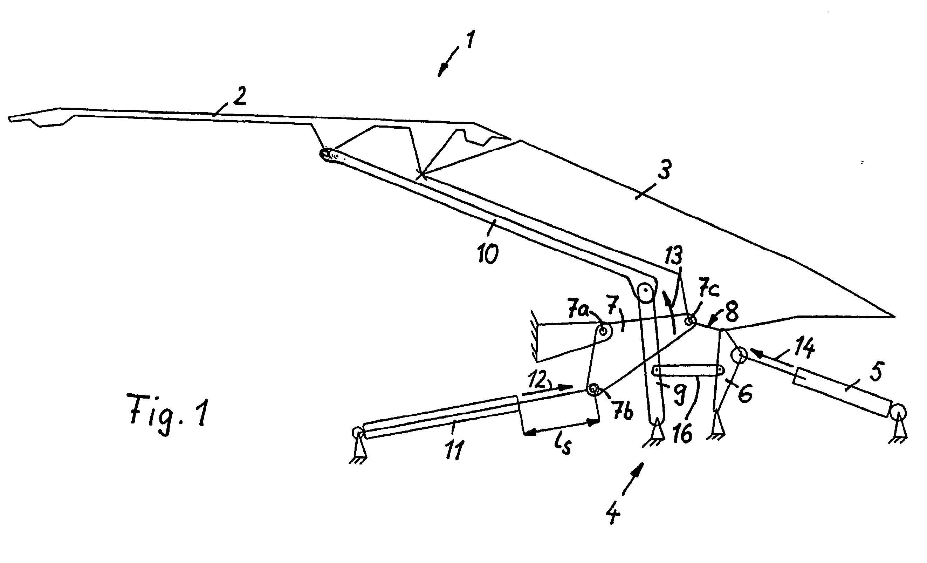

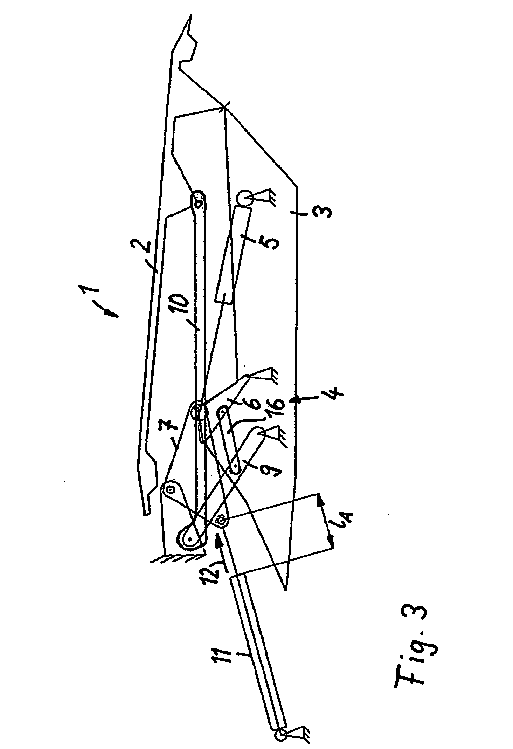

Bei dem in Fig. 1 dargestellten Fahrzeugdach 1 handelt es sich um ein verstellbares Hardtop mit einem vorderen Dachteil 2 und einem hinteren Dachteil 3, die jeweils in sich starr ausgebildet sind und über eine Dachkinematik 4 an der Fahrzeugkarosserie gehalten sind und mittels eines als Hydraulikzylinder 5 ausgebildeten Stellelements, das ebenfalls karosseriefest angelenkt ist, zwischen der in Fig. 1 gezeigten Schließstellung und der in Fig. 3 gezeigten Ablagestellung zu verstellen ist. Die Dachkinematik 4 umfasst ein Viergelenk, bestehend aus einem karosserieseitig gelagerten Antriebslenker 6, einem ebenfalls karosserieseitig gelagerten Stützlenker 7 sowie einem beide Lenker gelenkig verbindenden C-Säulenlenker 8. Über dieses Viergelenk ist das hintere Dachteil 3 an die Fahrzeugkarosserie gekoppelt, wobei gegebenenfalls der C-Säulenlenker 8 auch durch einen Abschnitt des Dachteiles 3 gebildet sein kann. An dem Antriebslenker 6 des Viergelenks greift der Hydraulikzylinder 5 an, der karosserieseitig ebenfalls schwenkbar gelagert ist. Wird die Kolbenstange des Hydraulikzylinders 5 translatorisch ausgefahren, verschwenkt der Antriebslenker 6 um seine karosseriefeste Drehachse und betätigt dadurch die gesamte Dachkinematik, was zu einer Stellbewegung des Fahrzeugdaches 1 führt.

Die Dachkinematik 4 umfasst des Weiteren einen karosserieseitig schwenkbar gelagerten Hilfslenker 9, an dem ein Hauptlenker 10 schwenkbar gekoppelt ist, dessen dem Hilfslenker 9 abgewandtes Ende schwenkbar mit dem vorderen Dachteil 2 verbunden ist. Weiterhin ist ein Koppellenker 16 vorgesehen, der den Antriebslenker 6 mit dem Hilfslenker 9 koppelt und sowohl auf Seiten des Antriebslenker 6 als auch auf Seiten des Hilfslenkers 9 drehbar gelagert ist. Über diese Kopplung wird eine kinematisch eindeutig festgelegte Bewegung des vorderen Dachteiles 2 erzielt.

Der Stützlenker 7, welcher Teil der Viergelenkkinematik ist, über die das hintere Dachteil 3 an der Fahrzeugkarosserie gehalten ist, wird von einem Federelement 11 kraftbeaufschlagt. Das Federelement 11 ist im Ausführungsbeispiel als Gasdruckfeder ausgeführt, die an der Fahrzeugkarosserie schwenkbar gelagert ist und am Stützlenker 7 an einem Gelenk 7b angreift. Der Stützlenker 7 ist als Dreieckslenker ausgeführt, der über ein mittleres Gelenk 7a an der Fahrzeugkarosserie schwenkbar gelagert ist und über ein weiteres Gelenk 7c, das dem Gelenk 7b gegenüberliegt, schwenkbar mit dem C-Säulenlenker 8 verbunden ist. Das Federelement 11 ist in der Weise angeordnet und ausgelegt, dass in der in Fig. 1 gezeigten Schließposition des Fahrzeugdaches vom Federelement 11 eine Feder-Druckkraft in Pfeilrichtung 12 auf das Gelenk 7b am Stützlenker 7 wirkt, wodurch der Stützlenker 7 ein Drehmoment gemäß Pfeilrichtung 13 im Gegenuhrzeigersinn um sein karosserieseitiges Gelenk 7a erfährt. Das Drehmoment in Pfeilrichtung 13 unterstützt die Bewegung der Dachkinematik 4 bei einer Ausfuhrbewegung des Hydraulikzylinders 5 in Pfeilrichtung 14 zu Beginn der Stellbewegung, mit der das Fahrzeugdach aus der gezeigten Schließposition angehoben und in die Ablageposition verschwenkt wird. Das unterstützende Drehmoment, erzeugt von dem Federelement 11, erleichtert die Anhebebewegung aus der Schließposition heraus. Die Pfeilrichtung 13, die die Wirkung des Drehmomentes auf den Stützlenker 7 darstellt, ist identisch mit der Anfangs-Drehbewegung des Stützlenkers bei einer Betätigung des Hydraulikzylinders 5 zum Anheben des Daches.

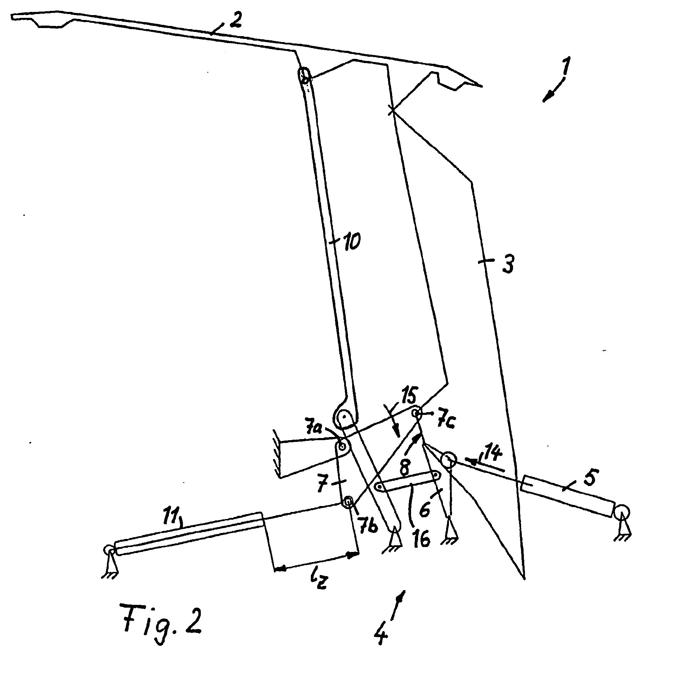

In Fig. 2 ist das Fahrzeugdach 1 in einer Zwischenposition zwischen der Schließstellung und der Ablagestellung gezeigt. In dieser Zwischenposition ist der Hydraulikzylinder 5 noch nicht vollständig ausgefahren und bewegt sich weiterhin in Pfeilrichtung 14, damit die endgültige Ablageposition erreicht werden kann. Der Stützlenker 7 hat dagegen eine Umkehrposition erreicht: Wird diese Umkehrposition überschritten, kehrt sich die Drehrichtung des Stützlenkers 7 aus der in der in Fig. 1 gezeigten Pfeilrichtung 13 im Gegenuhrzeigersinn um das karosseriefeste Gelenk 7a in eine Bewegung in Pfeilrichtung 15 im Uhrzeigersinn um, so dass beim Annähern an die zu ereichende Endposition der Stützlenker wieder in Richtung seiner Ausgangsposition verschwenkt wird. In der Zwischenposition gemäß Fig. 2 hat das Federelement 11 seine am weitesten elongierte Position erreicht, welche mit dem Aushub l_{z} gekennzeichnet ist, wobei dieser Aushub größer ist als der mit lₛ in Fig. 1 gekennzeichnete Aushub des Federelementes 11 in der Schließposition des Fahrzeugdaches. Im Umkehrpunkt des Stützlenkers 7 übt das Federelement 11 zweckmäßig keine bzw. eine geringst mögliche Federkraft auf den Stützlenker aus.

In Fig. 3 ist das Fahrzeugdach 1 in seiner Ablageposition in einem heckseitigen Verdeckkasten gezeigt. Das hintere Dachteil 3 ist gegenüber der Schließposition um näherungsweise 180° verdreht, insbesondere um etwa 160°, und liegt mit seiner Oberseite nach unten. Das vordere Dachteil 2 hat seine ursprüngliche Ausrichtung behalten und liegt mit der Außenseite nach oben unmittelbar auf dem hinteren Dachteil. Der Hydraulikzylinder 5 ist maximal ausgefahren. Der Stützlenker 7 ist gegenüber der Zwischenposition gemäß Fig. 2 so weit zurückverschwenkt worden, dass der Aushub l_{A} des Federelementes 11 geringer ist als der Aushub l_{Z}, welcher der Zwischenstellung nach Fig. 2 entspricht, und auch geringer ist als der Aushub lₛ der Schließposition gemäß Fig. 1. Das Federelement 11 übt in der Ablageposition eine Federkraft in Pfeilrichtung 12 auf den Stützlenker 7 aus, wodurch dieser ein im Gegenuhrzeigersinn wirkendes Drehmoment erfährt, das in Schließrichtung des Fahrzeugdaches wirkt, wodurch der Anhebevorgang aus der Ablageposition heraus zum Schließen des Daches durch das Federelement 11 unterstützt wird.

Beim Schließen des Daches läuft der gesamte Vorgang in entgegen gesetzter Richtung ab.

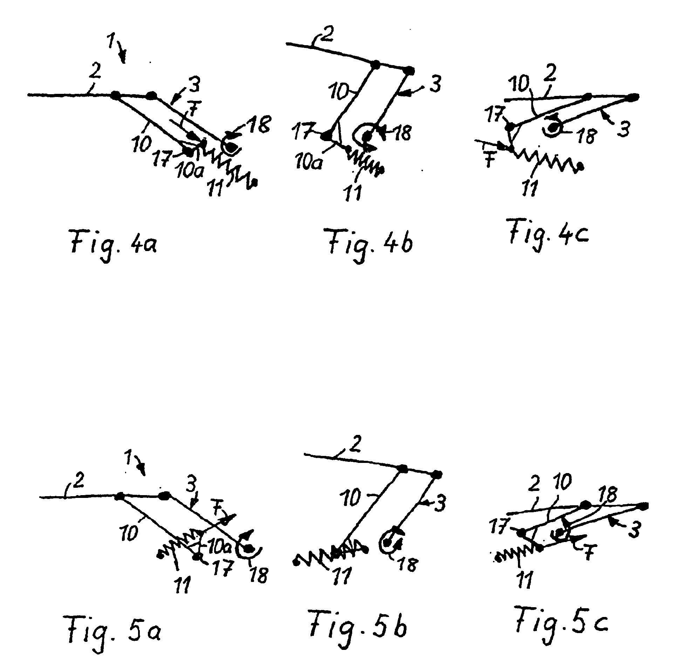

Bei den in den folgenden Figuren 4a bis 4c sowie 5a bis 5c dargestellten Ausführungsbeispielen handelt es sich um ein zweiteiliges Hardtop-Fahrzeugdach 1 mit einem vorderen Dachteil 2 und einem hinteren Dachteil 3. Die Dachkinematik zur Überführung des Fahrzeugdaches zwischen Schließposition und Ablageposition umfasst einen Hauptlenker 10, welcher dachseitig gelenkig mit dem vorderen Dachteil 2 und karosserieseitig gelenkig über ein Drehgelenk 17 mit der Fahrzeugkarosserie gekoppelt ist. Am hinteren Dachteil 3, insbesondere an einer C-Säule des hinteren Dachteiles 3, greift ein nicht näher dargestelltes Stellelement an und beaufschlagt das hintere Dachteil 3 gemäß Pfeilrichtung 18 zur Überführung des Fahrzeugdaches zwischen Schließ- und Ablageposition.

Die Fig. 4a bzw. 5a zeigen das Fahrzeugdach in Schließposition, die Fig. 4b bzw. 5b stellen eine Übergangsstellung zwischen Schließ- und Ablageposition dar und die Fig. 4c und 5c zeigen das Fahrzeugdach in der abgelegten Position.

Zur Unterstützung beim Anheben des Fahrzeugdaches aus jeder Endposition - sowohl der Schließposition als auch der Ablageposition - ist ein an der Fahrzeugkarosserie abgestütztes Federelement 11 vorgesehen, welches an einem Seitenarm 10a des Hauptlenkers 10 angreift und am Angriffspunkt am Seitenarm 10a eine Federkraft F ausübt. Der Seitenarm 10a ist einteilig mit dem Hauptlenker 10 ausgebildet und schließt gegenüber dem Hauptlenker 10 einen Winkel ein. Das Federelement 11 beaufschlagt den Hauptlenker 10 in der Schließposition des Fahrzeugdaches 1 mit einem um das Drehgelenk 17 wirkenden Drehmoment in Richtung der gegenüberliegenden Ablageposition und in der Ablageposition des Fahrzeugdaches in Richtung der gegenüberliegenden Schließposition.

In der mittleren Stellung des Fahrzeugdaches gemäß den Fig. 4b und 5b schneidet die Wirklinie des Federelements 11 das Drehgelenk des Hauptlenkers 10, so dass der Hebelarm Null ist und kein wirksames Drehmoment um die Drehachse des Drehgelenks auf den Hauptlenker 10 übertragen wird. Alternativ oder zusätzlich kann sich das Federelement auch in einer zumindest näherungsweise entspannten Position befinden, so dass in dieser Lage keine Federkraft auf den Seitenarm 10a und kein Drehmoment auf den Hauptlenker 10 ausgeübt wird.

Im Ausführungsbeispiel gemäß den Fig. 4a bis 4c ist das Federelement 11 als Zugfeder ausgebildet, die einenends an der Fahrzeugkarosserie und anderenends an dem Seitenarm 10a angelenkt ist und in ihrer gespannten Lage - wie in den Fig. 4a und 4c dargestellt - auf den Seitenarm 10a eine Zugkraft gemäß eingezeichnetem Pfeil F ausübt.

Im Ausführungsbeispiel gemäß den Fig. 5a bis 5c ist das Federelement 11 dagegen als Druckfeder ausgeführt, die zwar in analoger Weise zum vorhergehenden Ausführungsbeispiel einenends an der Fahrzeugkarosserie und anderenends am Seitenarm 10 angelenkt ist, jedoch in den Endpositionen gemäß Fig. 5a und 5c auf den Seitenarm 10a eine Druckkraft gemäß eingezeichneten Pfeilen ausübt.

In beiden Ausführungen - sowohl als Zugfeder als auch als Druckfeder - wird das Anheben des Fahrzeugdaches aus jeder Endposition unterstützt. Gegebenenfalls kommt auch eine Ausführung des Federelements 11 als Drehfeder in Betracht, die ein um das Drehgelenk 17 wirkendes Drehmoment auf den Hauptlenker 11 erzeugt. Die Drehfeder wird insbesondere in der Weise ausgelegt bzw. in die Kinematik integriert, dass in einer Zwischenposition zwischen den Endlagen kein Drehmoment erzeugt bzw. auf den Hauptlenker übertragen wird.

In der beschriebenen Ausführung verteilt sich die Belastung der Dachkinematik auf zwei unterschiedliche Bauteile der Dachkinematik, nämlich auf den von dem passiven Federelement beaufschlagten Hauptlenker und auf die von dem aktiven Antrieb beaufschlagte C-Säule. Hierdurch werden die auf jedes Bauteil wirkenden Kräfte reduziert. Das passiv wirkende Federelement unterstützt die vom aktiven Antrieb erzeugte Drehbewegung, so dass klein dimensionierte Antriebe verwendet werden können. Dies eröffnet die Möglichkeit, standardisierte Antriebseinheiten für unterschiedliche Dachsysteme bzw. Fahrzeugdächer zu verwenden und individuelle Anpassungen über die Auswahl unterschiedlich starker Federn in den passiven Federelementen durchzuführen.

Ein weiterer Vorteil liegt in der Verwendung von aktiven und/oder passiven Drehantrieben, wobei zu den passiven Drehantrieben auch die translatorisch linearen, unmittelbar auf einen Schenkel bzw. Seitenarm des Hauptlenkers wirkenden Federelemente zu zählen sind. Bei Drehantrieben kann auf den Einsatz von Getrieben zur Umsetzung der translatorischen Stellbewegung in eine rotatorische Drehbewegung verzichtet werden.

## Patentansprüche

1. Verstellbares Fahrzeugdach, mit einer Dachkinematik (4), über die das Fahrzeugdach (1) mittels eines karosseriefest gehaltenen Stellelements 5, das an der Dachkinematik (4) angreift, zwischen zwei Endpositionen - eine Schließposition und eine Ablageposition - zu verstellen ist, wobei an der Fahrzeugkarosserie ein Federelement (11) abgestützt ist, das die Dachkinematik (4) in jeder Endposition des Fahrzeugdaches (1) in Richtung der gegenüberliegenden Endposition kraftbeaufschlagt,
**dadurch gekennzeichnet,**
**dass** das Fahrzeugdach ein vorderes Dachteil (2) und ein hinteres Dachteil (3) aufweist, und dass die Dachkinematik (4) ein Viergelenk mit zwei karosserieseitig abgestützten Lenkern (6, 7) und einem zwischenliegenden C-Säulenlenker (8) umfasst, wobei einer der karosserieseitigen Lenker als Antriebslenker (6) von dem Stellelement (5) und der zweite karosserieseitige Lenker als Stützlenker (7) von dem Federelement (11) beaufschlagt ist, und dass die Dachkinematik (4) einen karosserieseitig schwenkbar gelagerten Hilfslenker (9) aufweist, an dem ein schwenkbar mit dem vorderen Dachteil (2) gekoppelter Hauptlenker (10) schwenkbar gekoppelt ist, und dass ein Koppellenker (16) vorgesehen ist, der den Antriebslenker (6) mit dem Hilfslenker (9) koppelt und sowohl auf Seiten des Antriebslenkers (6) als auch auf Seiten des Hilfslenkers (9) drehbar gelagert ist.

2. Fahrzeugdach nach Anspruch 1,
**dadurch gekennzeichnet,**
**dass** der Stützlenker (7) als Dreieckslenker ausgebildet ist, der über sein mittleres Gelenk (7a) karosseriefest gehalten ist, wobei über die beiden außenliegenden Gelenke (7b, 7c) des Stützlenkers (7) die Verbindung mit dem C-Säulenlenker (8) bzw. mit dem Federelement (11) geschaffen ist.

3. Fahrzeugdach nach Anspruch 1 oder 2,
**dadurch gekennzeichnet,**
**dass** das an der Dachkinematik (4) angreifende Federelement (11) in beiden Endpositionen des Fahrzeugdaches in gleicher Wirkrichtung federbelastet ist.

4. Fahrzeugdach nach einem der Ansprüche 1 bis 3,
**dadurch gekennzeichnet,**
**dass** die von dem Federelement (11) auf die Dachkinematik (4) übertragene Federkraft in einer Zwischenposition des Daches (1) zwischen den beiden Endpositionen näherungsweise Null ist.

5. Fahrzeugdach nach einem der Ansprüche 1 bis 4,
**dadurch gekennzeichnet,**
**dass** das Federelement (11) eine Gasdruckfeder ist.

6. Fahrzeugdach nach einem der Ansprüche 1 bis 5,
**dadurch gekennzeichnet,**
**dass** das Fahrzeugdach (1) als Hardtop mit mindestens zwei starren Dachteilen (2, 3) ausgeführt ist.

## Claims

1. Adjustable vehicle roof, having roof kinematics (4) via which the vehicle roof (1) can be adjusted between two end positions - a closed position and a put-away position - by means of an adjusting element (5) which is secured on the body and acts on the roof kinematics (4), a spring element (11) being supported on the vehicle body and, in every end position of the vehicle roof (1), subjecting the roof kinematics (4) to a force in the direction of the opposite end position, **characterized in that** the vehicle roof has a front roof part (2) and a rear roof part (3), and **in that** the roof kinematics (4) comprises a four-bar linkage with two links (6, 7) supported on the body and a C-pillar link (8) situated in between, a first of the links on the body, as the driving link (6), being acted upon by the adjusting element (5) and the second link on the body, as the supporting link (7) being acted upon by the spring element (11), and **in that** the roof kinematics (4) has an auxiliary link (9) which is mounted pivotably on the body and to which a main link (10), which is coupled pivotably to the front roof part (2), is coupled pivotably, and **in that** a coupling link (16) is provided which couples the driving link (6) to the auxiliary link (9) and is mounted rotatably both on the driving link (6) and on the auxiliary link (9).

2. Vehicle roof according to Claim 1, **characterized in that** the supporting link (7) is designed as a triangular link which is secured on the body via its central joint (7a), the connection to the C-pillar link (8) and to the spring element (11) being provided via the two outer joints (7b, 7c) of the supporting link (7).

3. Vehicle roof according to Claim 1 or 2, **characterized in that** the spring element (11) acting on the roof kinematics (4) is spring-loaded in the same direction of action in both end positions of the vehicle roof.

4. Vehicle roof according to one of Claims 1 to 3, **characterized in that** the spring force transmitted by the spring element (11) to the roof kinematics (4) is virtually zero in an intermediate position of the roof (1) between the two end positions.

5. Vehicle roof according to one of Claims 1 to 4, **characterized in that** the spring element (11) is a gas-filled compression spring.

6. Vehicle roof according to one of Claims 1 to 5, **characterized in that** the vehicle roof (1) is designed as a hard top with at least two rigid roof parts (2, 3).

## Revendications

1. Toit de véhicule mobile, comprenant une cinématique de toit (4), par le biais de laquelle le toit du véhicule (1) doit être déplacé au moyen d'un élément de commande (5) maintenu fixement sur la carrosserie, qui vient en prise avec la cinématique de toit (4), entre deux positions d'extrémité - une position de fermeture et une position de rangement -, un élément de ressort (11) étant supporté sur la carrosserie du véhicule, lequel sollicite par une force la cinématique de toit (4) dans chaque position d'extrémité du toit du véhicule (1) dans la direction de la position d'extrémité opposée,
**caractérisé en ce que** le toit du véhicule présente une partie de toit avant (2) et une partie de toit arrière (3) et **en ce que**
la cinématique de toit (4) comprend un quadrilatère articulé avec deux bras oscillants (6, 7) supportés du côté de la carrosserie et un bras oscillant du montant de custode (8) situé entre les deux, un des bras oscillants du côté de la carrosserie étant sollicité en tant que bras oscillant d'entraînement (6) par l'élément de commande (5) et le deuxième bras oscillant du côté de la carrosserie étant sollicité en tant que bras oscillant de support (7) par l'élément de ressort (11), et **en ce que** la cinématique de toit (4) présente un bras oscillant auxiliaire (9) monté pivotant du côté de la carrosserie, auquel est accouplé de manière pivotante un bras oscillant principal (10) accouplé de manière pivotante à la partie de toit avant (2), et **en ce qu'**un bras oscillant d'accouplement (16) est prévu, lequel accouple le bras oscillant d'entraînement (6) au bras oscillant auxiliaire (9) et est monté de manière rotative à la fois du côté du bras oscillant d'entraînement (6) et du côté du bras oscillant auxiliaire (9).

2. Toit de véhicule selon la revendication 1,
**caractérisé en ce que**
le bras oscillant de support (7) est réalisé sous forme de bras oscillant triangulaire, qui est maintenu fixement à la carrosserie par le biais de son articulation centrale (7a), la connexion au bras oscillant de la colonne de custode (8) ou à l'élément de ressort (11) étant créée par le biais des deux articulations extérieures (7b, 7c) du bras oscillant de support (7).

3. Toit de véhicule selon la revendication 1 ou 2,
**caractérisé en ce que** l'élément de ressort (11) venant en prise avec la cinématique de toit (4) est sollicité par ressort dans les deux positions d'extrémité du toit du véhicule dans le même sens d'action.

4. Toit de véhicule selon l'une quelconque des revendications 1 à 3,
**caractérisé en ce que**
la force de ressort transmise de l'élément de ressort (11) à la cinématique de toit (4) pratiquement nulle dans une position intermédiaire du toit (1) entre les deux positions d'extrémité.

5. Toit de véhicule selon l'une quelconque des revendications 1 à 4,
**caractérisé en ce que**
l'élément de ressort (11) est un ressort pneumatique à gaz.

6. Toit de véhicule selon l'une quelconque des revendications 1 à 5,
**caractérisé en ce que**
le toit du véhicule (1) est réalisé sous forme de hard-top avec au moins deux parties de toit rigides (2, 3).
